# EUROPEAN PATENT SPECIFICATION

(11) **EP 3 366 446 B1**
(45) Date of publication and mention of the grant of the patent: **07.08.2019**
(21) Application number: 15906676.0
(22) Date of filing: 21.10.2015
(51) Int. Cl.: B29C 45/20, B22C 7/02, B29C 67/24

(54) **WAX INJECTION MOLDING MACHINE AND INJECTION NOZZLE USED IN LOST-WAX CASTING**
WACHSSPRITZGIESSMASCHINE UND EINSPRITZDÜSE IM WACHSAUSSCHMELZGUSS
MACHINE À MOULER LA CIRE PAR INJECTION ET BUSE D'INJECTION UTILISÉE EN MOULAGE À CIRE PERDUE

(43) Date of publication of application: 29.08.2018
(73) Proprietor: Eishin Technology Co., Ltd, Ayase-shi, Kanagawa 252-1107 (JP)
(72) Inventor: KUBO, Chikanari, Yamato-shi Kanagawa 242-0002 (JP)
(74) Representative: Treeby, Philip David William
(86) International application number: PCT/JP2015/079741
(87) International publication number: WO 2017/068670

(56) References cited:
- GB-A- 2 219 236
- JP-A- 2000 202 880
- JP-A- 2006 205 175
- JP-A- 2011 143 581
- JP-A- 2011 143 581
- JP-A- 2011 218 705
- JP-U- S57 162 825
- US-A- 3 535 743
- US-A- 4 082 486
- US-A- 4 274 823
- US-A- 4 822 269

## Description

### TECHNICAL FIELD

The present application relates to a wax injection molding machine used in lost-wax casting and injection nozzle for a wax injection molding machine used in lost-wax casting.

### BACKGROUND ART

Ornaments, accessories, jewelry and the likes mainly using a noble metal are small and have complicated and precise shapes. There has been a demand to produce such products in large quantities, and a lost wax precision injection method has been developed in this industry. Of course, this method is also applicable in manufacturing precision industrial components other than the above.

Lost wax precision casting in the jewelry manufacturing industry has the following steps.
A first step is a process of producing a model.
A second step is a process of producing a rubber mold having a cavity of the same shape as the model.
A third step is a process of producing a wax mold of the same shape as the model, by injecting a molten wax into the rubber mold, and taking it out. In general, by repeatedly performing the third step, a large number of wax molds are produced. A fourth step is a process of attaching a large number of wax molds produced in the third step in a tree-like manner around a wax stick while melting a runner end portion of the wax molds, placing it in a cylindrical heat-resistant vessel, pouring plaster into the vessel, and producing a plaster mold.
A fifth step is a baking process using an electric furnace or a gas furnace or others, which conprises melting the wax in the plaster mold at a low temperature to flow it out, burning completely the wax adhered to the inside of the cavity at a moderate temperature, strengthening the plaster mold to withstand an impact at the time of pouring a noble metal in it by further increasing the temperature, and then, waiting with lowering the temperature thereof to a level suitable for pouring the noble metal.
A sixth step is a casting process of pouring a noble metal into the plaster mold having a number of cavities of the same shape as the model.
A seventh step is a finishing process consisting of breaking the plaster to pieces by rapidly cooling the plaster mold with water after the noble metal has been solidified, taking out the noble metals in the tree-like form, cutting away unnecessary portions, and polishing the noble metal of the same shape as the model.

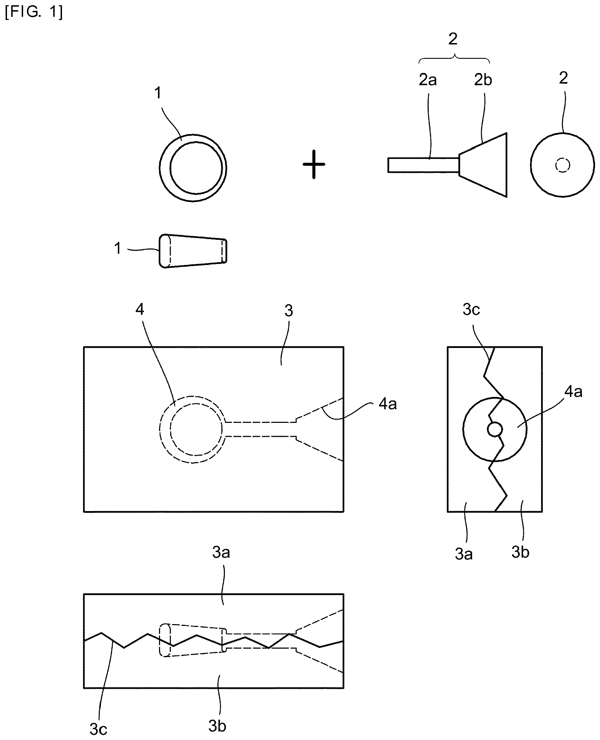

A method of manufacturing the rubber mold in the second step will be described with reference to FIG. 1. In the second step, a molding frame (not shown) of a size corresponding to a size of a rubber mold 3 to be manufactured, a model 1 and a component 2 (a sprue runner 2a and a pouring gate 2b) are used. Steps of closing the bottom of the molding frame by a plate, pouring a pre-vulcanization silicon rubber material in the lower half of the frame, placing the model 1 to which the component 2 is attached on it, pouring a pre-vulcanization material in the upper half of the frame, closing the upper part of the frame by a plate, and vulcanizing by increasing the temperature while pressing are carried out. A silicon rubber of two-liquid solidification type may be used instead of the vulcanizable rubber.

When the silicone rubber has been hardened to have the rubber inherent elasticity, the rubber mold 3 is removed from the frame, a zig-zag cut 3c is made in the rubber mold, the model 1 and the component 2 bonded thereto are taken out, and the rubber mold is separated into an upper rubber mold 3a and a lower rubber mold 3b. Thus, a rubber mold 3 having a cavity 4 of the same shape as the model 1 and the component 2 in it is obtained. By making such a cut 3c on the entire separation surface, the upper and lower rubber molds 3a and 3b can be put together exactly in line with each other, and the inside cavity shape can be accurately reproduced.

Such a cut 3c also has an effect to facilitate vacuuming and sealing of pressurized wax at the time of injecting a wax into the rubber mold 3 to create a wax mold. By taking out the wax mold from the rubber mold 3 with deforming the lower rubber mold 3b after separating the upper rubber mold 3a from the mating surfaces (cut) 3c, even a wax mold having a complicated shape can be taken out easily without breaking it. In some cases, the interior of the rubber mold may be divided into several parts, or a core(s) may be inserted.

Since models have a variety of sizes, the sizes and thicknesses of rubber molds also change accordingly. In addition, the rubber hardness is also often changed in accordance with the durability of the rubber mold and the degree of difficulty of removing wax molds from the interior of the rubber molds.

### TECHNICAL FIELD

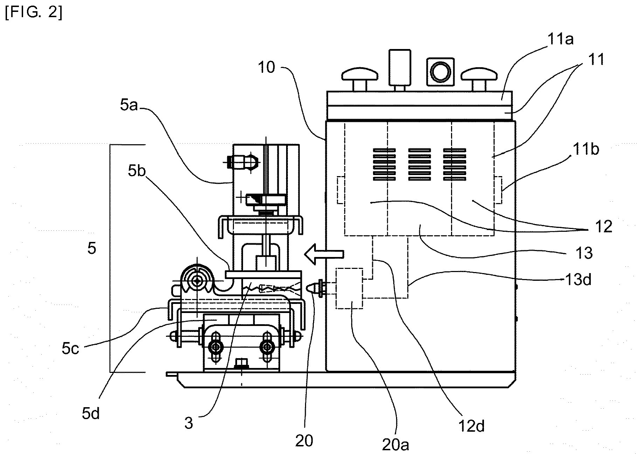

FIG. 2 shows a conceptual diagram of the clamp device 5 and the wax mold injection molding machine 10 used in the third step. The clamp device 5 is for properly clamping the rubber mold 3 to coincide the axis of the injection nozzle 20 with the height of the sprue 4a of the rubber mold 3 and pressing it against the injection nozzle 20. The wax mold injection molding machine 10 holds two tanks of a wax tank and a vacuum tank inside a single tank 11, and is for evacuating the cavity in the rubber mold 3 from the injection nozzle 20, and then injecting a dissolved wax into the cavity (see the arrow in the figure).

Generally, in the tank 11, the wax tank 12 and the vacuum tank 13 are concentrically arranged, pressurized air is supplied from the upper tank lid 11a to the wax tank 12, and a vacuum source is connected to the vacuum tank 13 to maintain the vacuum. Further, a band heater 11b for warming the entire tank 11 at an appropriate temperature to keep the wax dissolved is arranged around the tank 11.

The injection nozzle 20 is selectively connected to the wax tank 12 and the vacuum tank 13 via a valve 20a, and by switching the valve 20a, the injection nozzle 20 can be set to three states: a state being separated from both the wax tank 12 and the vacuum chamber 13 (state 0), a state connected to the vacuum chamber 13 (state 2), and a state connected to the wax tank 12 (state 3).

The clamp device 5 mainly comprises a rubber mold mount 5c to place the rubber mold 3, a clamp force generator 5a for clamping the rubber mold 3, a clamp plate 5b connected thereto, and a pressing mechanism 5d for pressing the rubber mold 3 against the injection nozzle.

In the clamp device 5 and the wax mold injection molding machine 10 configured as described above, the cavity 4 of the rubber mold 3 is evacuated by setting the injection nozzle 20 to state 1, setting the rubber mold 3 in the clamp device 5, advancing the rubber mold mount 5c to press the rubber mold 3 against the injection nozzle 20 and switching the injection nozzle 20 from state 1 to state 2, and then, the cavity 4 of the rubber mold 3 is filled with a wax by switching the injection nozzle 20 from state 2 to state 3.

After returning to state 1, the rubber mold mount 5c is retracted, the clamp plate 5b is raised, the rubber mold 3 is taken out and is divided from the mating surface 3c, and the wax mold having the same shape as the cavity 4 is taken out. This is repeated many times and moved to the next fourth step.

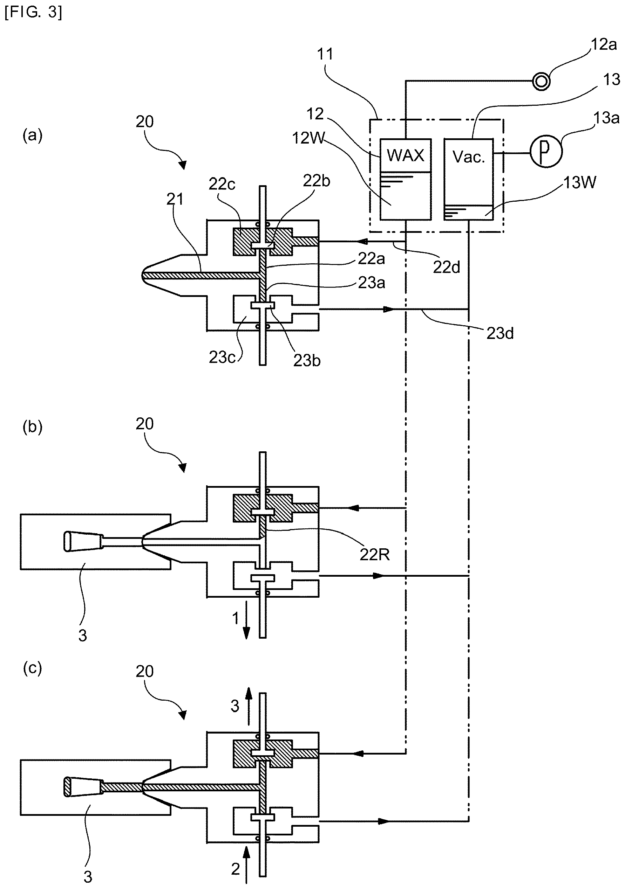

FIG. 3 shows a structure of a conventional injection nozzle 20. FIG. 3 also schematically shows a connection relationship between the injection nozzle 20 and the tank 11.

The injection nozzle 20 includes a common passage 21, a wax-side passage 22a, a wax valve 22b, a wax sump 22c, an exhaust-side passage 23a, an exhaust valve 23b, and a vacuum sump 23c. The common passage 21 is connected to the wax-side passage 22a and the exhaust side passage 23a in a T shape around the middle of the injection nozzle 20. The wax sump 22c and the vacuum sump 23c are connected to the wax tank 22 and the vacuum tank 23 via lines 22d and 23d, respectively. The wax valve 22b and the exhaust valve 23b can individually be opened and closed by a driving source (not shown). By opening the wax valve 22b, the common passage 21 communicates with the wax sump 22c, and by opening the exhaust valve 23b, the common passage 21 communicates with the vacuum sump 23c. A compressed air supply source 12a is connected to the wax tank 12. By a compressed air from the compressed air supply source 12a, the wax 12W of the wax tank 12 is supplied to the wax sump 22c. The vacuum tank 13 is evacuated by a vacuum pump 13a.

FIG. 3 (a) shows the injection nozzle 20 in state 1 in the process of repeating the third step. In state 1, both the wax valve 22b and the exhaust valve 23b are closed, and the wax is filled in all of the common passage 21, the wax-side passage 22a and the exhaust-side passage 23a.

FIG. 3 (b) shows state 2 where evacuation is performed after state 1 in FIG. 3 (a). After pressing the rubber mold 3 against the injection nozzle 20 and then opening the exhaust valve 23b as shown by the arrow 1, the exhaust side passage 23a and the vacuum sump 23c communicate with each other, and the wax in the common passage 21 and the exhaust side passage 23a is dawn into the vacuum tank 13 (see reference numeral 13W), and the cavity 4 of the rubber mold 3 is evacuated. Here, the residual wax 22R is left remained in the wax-side passage 22a.

FIG. 3 (c) shows state 3 in which wax is injected after the state shown in FIG. 3 (b). When the exhaust valve 23b is closed as shown by the arrow 2 and the wax valve 22b is opened with a slight time lag as shown by the arrow 3, the wax sump 22c communicates with the wax-side passage 22a, and the common passage 21, the wax-side passage 22a and the exhaust-side passage 23a are filled with the wax 12W from the wax tank 12, and the wax is injected from the common passage 21 to the pouring gate 4a of the rubber mold 3 and the cavity 4.

Thereafter, the wax valve 22b is closed, the rubber mold 3 is released from the injection nozzle 20, and the state 1 shown in FIG. 3 (a) is restored. In the third step, the above cycle of state 1 → state 2 → state 3 → state 1 (hereinafter occasionally referred to as an injection cycle) is repeated.

### CITATION LIST

### PATENT LITERATURE

Patent Literature 1: Japanese Unexamined Patent Application Publication No. 2011-143581

### SUMMARY OF THE INVENTION

### PROBLEMS TO BE SOLVED BY THE INVENTION

As described with reference to FIG. 3, during the transition from the state 1 to the state 2, the wax in the common passage 21 and the exhaust-side passage 23a is collected to the vacuum tank 13. The wax 13W thus collected is called a wax drain. The volume of a cavity in the rubber mold 3 for manufacturing a ring and the likes is usually very small, and the amount of the wax drain in one injection cycle assumes a considerably large ratio, sometimes equal or higher, compared to the amount of wax originally required for a wax mold product.

The wax drain discharged in the third step cannot be reused. The reason is that a release agent is applied to the hollow portion 4 in the rubber mold 3 and is mixed into the wax drain during evacuation. Further, there is concern that other dust will be mixed. If a release agent is mixed into wax, there may be an adverse affect to the properties of wax.

The wax in the lost wax casting contains additives for adjusting a melting temperature and strength or improving flowing property, in addition to a wax component. Further, perfumes or dyes for distinguishing materials and the like are also added. Therefore, the price of wax is by no means cheap and the cost of disposing as a drain is not low.

Further, in the injection nozzle 20, as the total length of the common passage 21 and the wax-side passage 22a is long, a pipe resistance in injection increases due to the viscosity of wax and a wax injection speed decreases. When the injection speed decreases, the wax is cooled down in the process that the wax fills the rubber mold 3 and the wax viscosity increases. Such a decrease in the injection speed and/or an increase in the wax viscosity may cause the wax to become difficult to be sufficiently filled in fine tip portions or the like of the hollow 4 (for example, prongs to fix a diamond). This may cause problems such as a shape of a product is not finished sharp.

In addition, there is another concern that the release agent of the rubber mold 3 and other dusts may be mixed into the residual wax 22R in the transition from the state 1 to the state 2. This may cause a quality deterioration or characteristic change of the wax injected to the rubber mold 3.

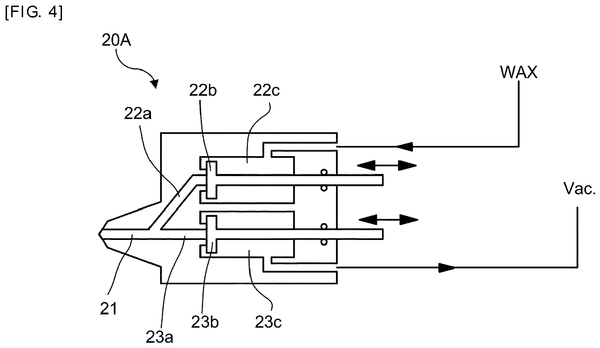

FIG. 4 shows another known injection nozzle 20A. In FIG. 4, parts corresponding to the injection nozzle 20 in FIG. 3 are denoted by the same reference numerals. In the injection nozzle 20A, the passage length of the common passage 21 plus the wax-side passage 22a is reduced by adjusting (to less than 90°) the connection angle of the common passage 21 to the wax-side passage 22a and the exhaust-side passage 23a. Therefore, in the injection nozzle 20A, the above-mentioned problem with respect to the injection nozzle 20 is reduced to some extent. However, a considerable amount of wax drain still occurs, and a piping resistance and a decrease in the wax injection speed caused thereby are not sufficiently improved. In addition, the problem of mixing of the release agent and other dusts into the residual wax 22R left in the wax-side passage 22a is not improved at all.

Patent Literature 1 is intended to solve the above problem. In the following description of Patent Literature 1, the reference numerals in Patent Literature 1 will be referenced.

Patent Literature 1 discloses an injection nozzle 1 for use in a wax resin injection casting apparatus. The injection nozzle 1 comprises an outer cylinder 2 having a discharge port 8 of a wax resin at the tip end thereof, an exhaust flow channel 3 that is defined in the outer cylinder 2 so that one end is in fluid communication with the discharge port 8 and the other end is in fluid communication with the exhaust system, and an exhaust flow channel sealing valve 4 that is slidable in the exhaust flow channel 3 to close or open the space between the exhaust flow channel 3 and the discharge port 8, a wax supply passage 5 that is defined so that one end is in fluid communication with the discharge port 8 and the other end is in fluid communication with the wax resin supply source, and a wax sealing valve 6 that is slidable in the wax resin passage 5 to close or open the space between the wax resin passage 5 and the discharge port 8, wherein the exhaust flow channel sealing valve 4 opens the space between the exhaust flow channel 3 and the discharge port 8 to communicate with each other in a state that the wax sealing valve 6 slides and closes the space between the wax resin passage 5 and the discharge port 8, and the wax sealing valve 6 opens the space between the wax resin flow pass 5 and the discharge port 8 to communicate with each other in the state that the exhaust flow channel sealing valve 4 slides to close the space between the exhaust flow pass 3 and the discharge port 8.

The injection nozzle 1 of Patent Literature 1 drastically decreases the wax drain owing to its structure. However, the injection nozzle 1 has a big problem in feasibility. In the injection nozzle 1, a function of an exhaust valve is achieved by abutting a packing or O-ring (hereinafter "packing or O-ring" is simply referred to as an "O-ring") at the tip of the exhaust flow channel sealing valve 4 against a seat portion 3a on the inner surface of the nozzle outer cylinder 2.

However, the pouring gate shown in Fig. 1 is about the same and very small irrespective of the size of the rubber mold. Therefore, R (radius of curvature) of the tip of the outer cylinder 2 needs to be about 4mm, and the discharge port needs to be designed to be about 3mm in diameter. It is practically impossible to seal such a minute portion with an O-ring. Viewing closely the drawings of Patent Literature 1, it seems a groove is provided at the tip of the exhaust flow pass sealing valve 4 and an O-ring is fitted in the groove, but even if it is so, such a structure can only be drawn as a picture and difficult to realize. In this structure, the thickness of the O-ring becomes about 0.5mm to 1mm, but such a small O-ring tends to come off very easily. Even if a groove having a shape in which the O-ring is hard to come off (such as by making the opening of the groove narrower than the O-ring by counter boring) is formed at the tip of the exhaust flow channel sealing valve 4, it is almost impossible to prevent the O-ring from coming off because the size of the O-ring is too small. In addition, if the opening is made smaller than the O-ring, the sealing function is extremely reduced, because it is difficult to obtain an enough collapse margin of the O-ring.

In addition, since the vicinity of the tip of the exhaust flow channel sealing valve 4 is a portion through which the air passes from the discharge port 8 at a very high speed during evacuation of the rubber mold 3 in such way to suck out the O-ring from the groove occurs in principle. When the apparatus is operated without pressing the rubber mold against the injection nozzle 1 or when the apparatus is operated in a state where the injection nozzle 1 and the pouring gate of the rubber mold do not coincide with each other, air passes through this portion at a even higher speed (in principle, a flow velocity close to a sound velocity). Assuming that the exhaust system buffer 54 becomes a complete vacuum, a maximum value of pressure difference to suck out the O-ring is 100 kpa (1kg/cm²), and this pressure is considered to act on the whole mounting area of the O-ring. Therefore, it is almost impossible to attach such a small O-ring at the tip of the exhaust flow channel sealing valve 4 with preventing it from coming off.

Further, the O-ring attaching direction is the same as the moving direction of the exhaust flow channel sealing valve 4. Therefore, once the O-ring comes off, it is moved to the exhaust flow channel 3 or the discharge port 8 or pinched, which makes the handling very difficult.

In this industry, there has been a strong demand to reduce the wax drain as explained in FIGS. 3 and 4 to zero or as much as possible. However, because of strict dimensional restrictions that a tip of the injection nozzle 20 has a curvature radius R of about 4mm and a diameter of the common passage 21 is about 3mm, there has been no example of realizing this demand. One of the objects of the present invention is to realize this demand.

Further, if a wax injection speed can be increased, it is possible to produce a wax mold more faithful to a model. This fact has not necessarily been recognized in this industry. Further, the present inventor is convinced that it is possible to prevent the quality deterioration of wax injected into the rubber mold 3 if the wax remaining in the wax-side passage 22a or the like can be eliminated. However, this is not recognized at all in the industry. Another object of the present invention is to realize them.

### MEANS FOR SOLVING THE PROBLEM

The problem underlying the current invention is solved by the injection nozzle as defined in the independent claim 1 below. Further embodiments of the invention are defined by the dependent claims below.

Particularly there is provided an injection nozzle of a wax mold injection molding machine, comprising:
an outer cylinder having an inner wall;
an inner cylinder having an inner wall and an outer wall, and movable in a front-rear direction;
a wax flow channel defined by the inner wall of the inner cylinder, and communicating with an inner cylinder opening at a front end of the inner cylinder;
an exhaust flow channel defined between the inner wall of the outer cylinder and the outer wall of the inner cylinder, and communicating with an outer cylinder opening at a front end of the outer cylinder;
a wax valve for opening and closing the wax flow channel, and
an exhaust valve for opening and closing the exhaust flow channel, wherein:
   the outer cylinder includes a small-inside-diameter part to which the outer cylinder opening is formed, and an inner surface tapered part whose inside diameter increases from the small-inside-diameter part to rearward, and
   the inner cylinder includes a small-outside-diameter part to which the inner cylinder opening is formed, and an outer surface tapered part whose outside diameter increases from the small-outside-diameter part to rearward, characterised in that: the exhaust valve includes a seal member attached to the outer surface tapered part, or a portion rearward of the outer surface tapered part and having a larger diameter than the small-outside-diameter part.

Preferably, the exhaust valve is opened and closed by the seal member abutting against and separating from the inner wall of the outer cylinder when the inner cylinder moves forward or rearward.

Preferably, a tapering angle of the outer surface tapered part is substantially the same as a tapering angle of the inner surface tapered part.

Preferably, a groove for receiving a part of the seal member is formed in the outer surface tapered part.

Preferably, a projection insertable into the outer cylinder opening and the inner cylinder opening is attached to a front end of the wax valve.

Preferably, the outer cylinder further includes a back seat facing rearward,
the inner cylinder further includes a front seat opposing to the back seat,
the diameters of the back seat and the front seat are larger than the outside diameter of the small-outside-diameter part, and
the seal member is attached to the back seat or the front seat.

A wax mold injection molding machine including the injection nozzle according to the above is also provided.

In the embodiments of the invention described above, by attaching the seal member to the portion having a larger diameter than the small-outside-diameter part, it becomes possible to use a seal member having a size larger than that of the injection nozzle of Patent Literature 1, and the sealing function can easily be enhanced.

Although the injection nozzle 1 of the Patent Literature 1 responds to the long-standing demands of the industry in terms of a great reduction of wax drain, it has not been commercialized even after three and a half years since the application of the Patent Literature 1 (two years from the publication date). One of the reasons is that it was difficult to seal the exhaust flow channel at the tip of the exhaust flow channel sealing valve 4. In addition, the original model of the injection nozzle 1 of Patent Literature 1 was invented by the inventor of the present invention and proposed to the applicant of the Patent Literature 1. The Patent Literature 1 was filed without the knowledge of the inventor of the present application. After this occurrence, the inventor of the present application ceased to provide technical cooperation to the applicant of the Patent Literature 1. It is considered that the applicant of the Patent Literature 1 has tried to commercialize the injection nozzle 1 by itself without success. It currently continues to manufacture the injection nozzle 20A shown in FIG. 4, which is obviously inferior to the injection nozzle 1 in function. The applicant believes that these facts are supporting evidences that the invention of the above-mentioned claim 1was not easily invented to those skilled in the art.

### BRIEF DESCRIPTION OF THE DRAWINGS

FIG. 1 is an explanatory diagram of a rubber mold manufacturing method.
FIG. 2 is a side view of a wax mold injection molding machine and a clamp device.
FIG. 3 shows a conventional injection nozzle 20.
FIG. 4 shows another conventional injection nozzle 20A.
FIG. 5 shows an injection nozzle 30 according to an embodiment of the present invention.
FIG. 6 shows examples of a drive mechanism of the injection nozzle 30 and an operation of the drive mechanism.
FIG. 7 shows an injection nozzle 30A according to another embodiment of the present invention.
FIG. 8 shows injection nozzles 30B to 30D according to still another embodiment of the present invention.
FIG. 9 shows a projection 34c that can be added to the injection nozzles 30A to 30D according to an embodiment of the present invention.

### MODE FOR CARRYING OUT THE INVENTION

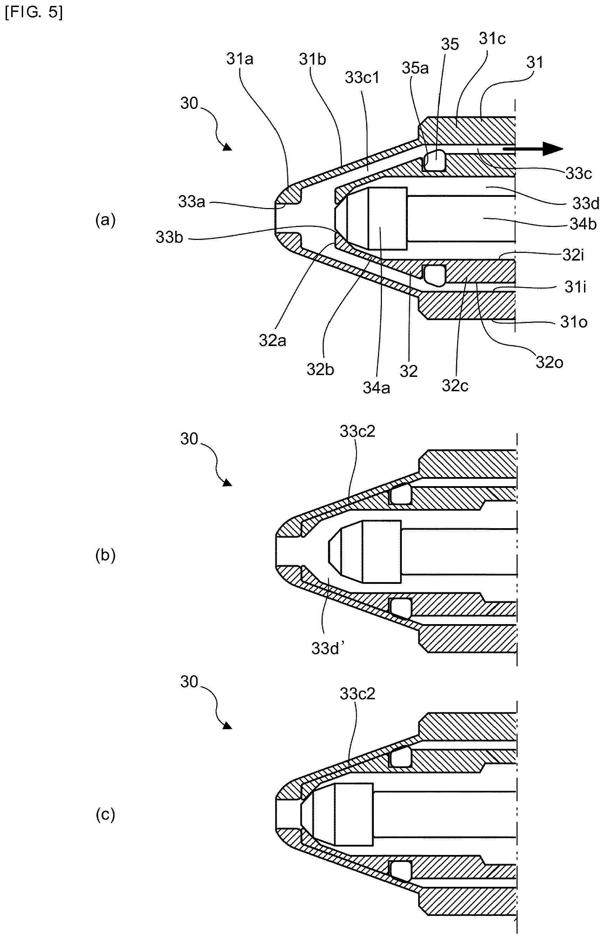

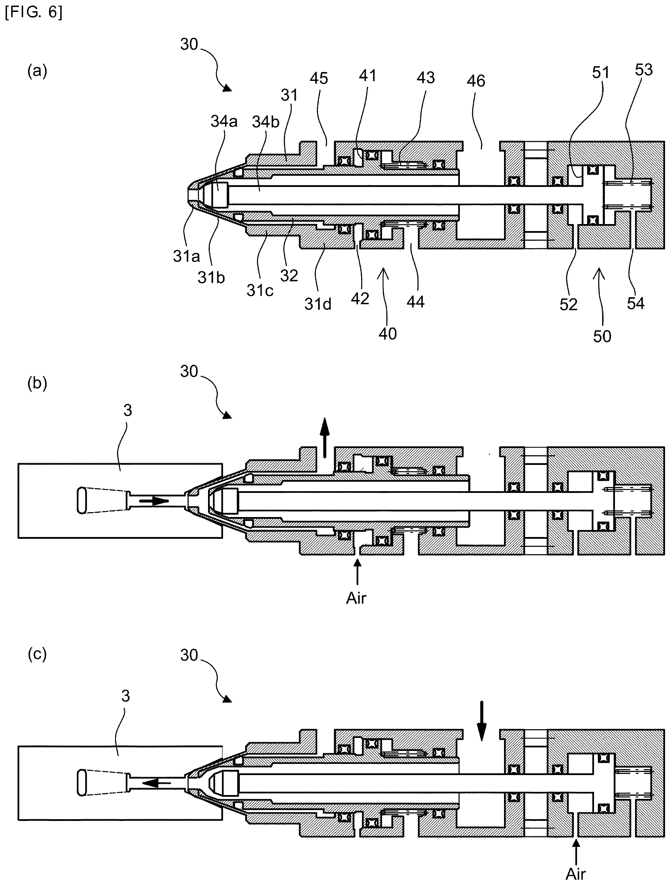

With reference to FIGS. 5 and 6, an injection nozzle 30 and a wax mold injection molding machine having the injection nozzle 30 according to an embodiment of the present invention will be described.

FIG. 5 shows the vicinity of a tip of the injection nozzle 30. As shown in the drawing, the injection nozzle 30 has an outer cylinder 31 and an inner cylinder 32.

The outer cylinder 31 is a hollow, preferably circularly-shaped member, having an inner wall 31i and an outer wall 31o. The outer cylinder 31 includes a small-inside-diameter part 31a with an opening (outer cylinder opening 33a), a large-inside-diameter part 31c having an inside diameter (the diameter of the inner wall 31i) larger than the small-inside-diameter part 31a, and an inner surface tapered part 31b which is positioned between the small-inside-diameter part 31a and the large-inside-diameter part 31c and whose inside diameter increases from the small-inside-diameter part 31a to rearward. In the illustrated example, the inside diameter of the inner surface tapered part 31b increases linearly, but it may increase in another manner such as curved, stepwise, or the like. The outside diameter of the outer wall 31o of the outer cylinder 31 of this embodiment increases from the small-inside-diameter part 31a to rearward so that the outer wall 31o can be inserted into the pouring gate 4a of the rubber mold 3. The shape of the outer wall 31o is not limited to this example.

The inner cylinder 32 is a hollow, preferably circularly-shaped member having an inner wall 32i and an outer wall 32o. The inner cylinder 32 is housed movable in the front-rear direction within the internal space of the outer cylinder 31. The front-rear direction is preferably the axial direction of the outer cylinder 31 and/or the inner cylinder 32.

The inner cylinder 32 has a small-outside-diameter part 32a with an opening (inner cylinder opening 33b), a large-outside-diameter part 32c having an outside diameter larger than the small-outside-diameter part 32a, an outer surface tapered part 32b which is positioned between the small-outside-diameter part 32a and the large-outside-diameter part 32c and whose outside diameter increases from the small-outside-diameter part 32a to rearward. In the illustrated example, the outside diameter of the outer surface tapered part 32b increases linearly, but it may increase in another manner such as curved, stepwise, or the like. In a preferred embodiment, the inner wall 31i of the inner surface tapered part 31b of the outer cylinder 31 has the same taper angle as the outer wall 32o of the outer surface tapered part 32b of the inner cylinder 32.

The exhaust flow channel 33c is defined between the inner wall 31i of the outer cylinder 31 and the outer wall 32o of the inner cylinder 32. The exhaust flow channel 33c communicates with the outer cylinder opening 33a. The wax flow channel 33d is defined by the inner wall 32i of the inner cylinder 32. The wax flow channel 33d communicates with the inner cylinder opening 33b.

The injection nozzle 30 has a wax valve for opening and closing the wax flow channel 33d. The wax valve of the present embodiment includes a valve seat 34a movable in the front-rear direction within the internal space of the inner cylinder 32 (in the wax flow channel 33d) and a valve rod 34b for driving the valve seat 34a in the front-rear direction. When the valve seat 34a is moved forward with respect to the inner cylinder 32, the valve seat 34a abuts on the inner cylinder opening 33b and the wax flow channel 33d is closed (FIG. 5 (a), 5 (c)). When the valve seat 34a is moved rearward, the valve seat 34a is separated from the inner cylinder opening 33b and the wax flow channel 33d is opened (Fig. 5 (b)). The wax valve may have another structure capable of opening and closing the wax flow channel 33d.

The injection nozzle 30 has an exhaust valve for opening and closing the exhaust flow channel 33c. The exhaust valve of the present embodiment has a seal member 35 attached to the outer surface tapered part 32b. In a preferred embodiment, the seal member 35 is composed of an O-ring made of an elastic material such as rubber. For stably attaching the seal member 35 to the outer surface tapered part 32b, it is preferable to have a structure in which a part of the seal member 35 is fitted in the seal groove 35a formed on the outer periphery of the outer surface tapered part 32b. The depth of the seal groove 35a is, for example, half or more, preferably 70 to 95%, particularly preferably 80 to 90% of the diameter of the seal member 35. When the inner cylinder 32 is moved forward with respect to the outer cylinder 31, the seal member 35 contacts with the inner wall 31i of the outer cylinder 31 and the exhaust flow channel 33c is closed (FIG. 5 (b), 5 (C)). When the inner cylinder 32 is moved rearward, the seal member 35 is separated from the inner wall 31i of the outer cylinder 31 and the exhaust flow channel 33c is opened (Fig. 5 (a)).

In the illustrated example, the seal member 35 is formed in the vicinity of the boundary between the outer surface tapered part 32b and the large-outside-diameter part 32c. However, the sealing member 35 may be formed around the middle of the outer surface tapered part 32b or closer to the front end. Alternatively, the seal member 35 may be provided at a portion at the rear side of the outer surface tapered part 32b having a diameter larger than the small-outside-diameter part 32a.

The injection nozzle 30 is installed in the wax mold injection molding machine 10 in place of the injection nozzle 20 in FIGS. 2 and 3.

FIG. 6 shows an example of the drive mechanism of the injection nozzle 30 and the operation of the drive mechanism. Particularly, FIG. 6 shows an injection nozzle 30 of a type of driving the inner cylinder 32 and the valve seat 34a by a pneumatic cylinder system. It is also possible to use other driving mechanisms, for example, an electromagnetic solenoid mechanism.

The outer cylinder 31 is connected to the injection valve body 31d at the rear side the outer cylinder 31. The outer cylinder 31 and the injection valve body 31d can be constituted with an integral member (for example, a cylindrical metal member).

A single acting air cylinder 40 is provided at the rear side of the injection valve body 31d. The single acting air cylinder 40 comprises a piston 41 connected to the rear end of the inner cylinder 32, an inner cylinder drive air port 42 for supplying an air for driving the piston 41 rearward, a return spring 43 for driving the piston 41 forward, and an atmosphere release port 44 for making the space at the return spring 43 side at atmospheric pressure. When a compressed air is supplied from the inner cylinder drive air port 42, the inner cylinder 32 moves rearward, and when the inner cylinder drive air port 42 is returned to the atmospheric pressure, the inner cylinder 32 moves forward. The inner cylinder 32 and the piston 41 can be constituted with an integral member (for example, a cylindrical metal member).

At a further rear side of the single acting air cylinder 40, a single acting air cylinder 50 is provided. The single acting air cylinder 50 comprises a piston 51 connected to the rear end portion of the valve rod 34b, a valve seat drive air port 52 for supplying an air for driving the piston 51 rearward, a return spring 53 for driving the piston 51 forward, and an atmosphere release port 54 for making the space at the return spring 53 side at atmospheric pressure. When a compressed air is supplied from the valve seat drive air port 52, the valve seat 34a moves rearward, and when the valve seat drive air port 52 is returned to the atmospheric pressure, the valve seat 34a moves forward. The valve seat 34a, the valve rod 34b and the piston 51 can be constituted with an integral member (for example, a metal rod).

The injection valve body 31d further includes an exhaust port 45 communicating with the exhaust flow channel 33c and a wax supply port 46 communicating with the wax flow channel 33d. The exhaust port 45 communicates with a vacuum tank 13 similar to that shown in FIGS. 2 and 3, and the wax supply port 46 communicates with the wax tank 12 similar to that shown in FIGS. 2 and 3. A vacuum sump and a wax sump similar to those shown in FIGS. 2 and 3 may be provided between the exhaust port 45 and the vacuum tank 13 and between the wax supply port 46 and the wax tank 12. In the illustrated example, the exhaust port 45 is located between the large-inside-diameter part 31c and the piston 41, and the wax supply port 46 is located between the piston 41 and the piston 51. Other arrangements are also possible.

The operation of the injection nozzle 30 in the third step will be described with reference to FIGS. 5 and 6.

In the state 1 shown in FIG. 6 (a) (FIG. 5 (c)), the inner cylinder 32 is pushed forward by the return spring 43 and the seal member 35 abuts on the inner wall 31i of the outer cylinder 31, and the exhaust flow channel 33c is closed. Here, if the taper angles of the inner wall 31i of the inner surface tapered part 31b and the outer wall 32o of the outer surface tapered part 32b are set to substantially the same, the volume of the portion of the exhaust flow channel 33c at the front side of the seal member 35 (the portion indicated by reference numeral 33c1 in FIG. 5 (a) and reference numeral 33c2 in FIG. 5 (b), FIG. 5 (c)) can be made to be substantially zero or extremely small. In the state 1, the valve seat 34a is pressed by the return spring 53 against the inner cylinder opening 33b, and the wax flow channel 33d is closed.

When a compressed air is supplied to the inner cylinder drive air port 42 after pressing the rubber mold 3 against the injection nozzle 30, the inner cylinder 32 is driven rearward, the seal member 35 is moved apart from the inner wall of the outer cylinder 31, and the exhaust flow channel 33c is opened. As a result, the state 2 shown in FIG. 6 (b) (FIG. 5 (a)) is obtained. At this time, the valve seat 34a is pressed by the return spring 53 to the inner cylinder opening 33b, and the wax flow channel 33d remains closed. When shifting to the state 2, the outer cylinder opening 33a communicates with the vacuum tank 13 through the exhaust flow channel 33c and the exhaust port 45, and the wax remained in the outer cylinder opening 33a in the previous injection cycle is taken into the vacuum tank 13 together with the air in the cavity 4 of the rubber mold 3. In the injection nozzle 30, since the volume of the portion 33c2 is almost zero, a large amount of residual wax such as residual wax 22R in the injection nozzle 20 does not occur.

When the pressure of the inner cylinder drive air port 42 is returned to the atmospheric pressure after the state 2, the inner cylinder 32 is pressed again to the outer cylinder 31 by the return spring 43, and the exhaust flow channel 33c is closed. Thereafter, after a short time, when an air is supplied to the valve seat drive air port 52, the valve seat 34a is driven rearward, the wax flow channel 33d opens and communicates with the outer cylinder opening 33a. This is the state 3 shown in FIG. 6 (c) (FIG. 5 (b)). By going into the state 3, the wax in the wax tank 12 is passed through the wax supply port 46 and the wax flow channel 33d, and injected into the cavity 4 of the rubber mold 3 from the outer cylinder opening 33a.

After the state 3, when the pressure of the valve seat drive air port 52 is returned to the atmospheric pressure, the valve seat 34a is moved forward by the return spring 53, the wax flow channel 33d is closed, and the state 1 of FIG. 6 (a) (FIG. 5 (c)) is returned.

As described above, the injection nozzle 30 of the present embodiment can have functions of a wax sealing valve and an exhaust valve inside the injection nozzle 30 at the same time.

In the injection nozzle 30, a portion corresponding to the common passage 21 (FIG. 3) of the injection nozzle 20 is the outer cylinder opening 33a shown in FIG. 5. As can be easily understood from the drawings, the outer cylinder opening 33a can be designed to be very short. Therefore, it is possible to reduce a piping resistance during wax injection and increase a wax injection speed. The wax flow channel 33d in the vicinity of the tip of the inner cylinder 32 (indicated by reference numeral 33d' in FIG. 5 (b)) also affects the piping resistance of the wax, however it is also easy to design the length of the portion 33d' to be short and/or design the sectional area of the portion 33d' to be large. Therefore, in the injection nozzle 30, it becomes easy to fill the cavity 4 with wax to every corner within a short time, and for example, a shape of a projected tip, such as a nail for fixing a diamond, can be finished sharper.

Further, in the injection nozzle 30, the exhaust side passage 23a (FIG. 3) of the injection nozzle 20 corresponds to the portion 33c1 or 33c2 shown in FIG. 5 (a). If the inner wall 31i of the inner surface tapered part 31b and the outer wall 32o of the outer surface tapered part 32b have substantially the same taper angle, the volume of the portion 33c2 during injection of wax can be substantially zero or extremely small (Fig. 5 (b)). Since the volume of the portion 33c2 is small and the wax injection path (the outer cylinder opening 33a) can be shortened, the amount of wax drain is extremely decreased.

In the injection nozzle 30, when the exhaust flow channel 33c is opened and vacuumed (see FIGS. 5 (a) and 6 (b)), it is possible to substantially eliminate the space for the residual wax 22R as in the wax-side passage 22a (FIG. 3) of the injection nozzle 20. Therefore, the amount of residual wax is remarkably reduced. As a result, quality deterioration of the injection wax due to mixing of release agent or dust into the residual wax can be reduced.

In the injection nozzle 30, the seal member 35 is disposed on the outer surface tapered part 32b. Unlike the injection nozzle 1 of Patent Literature 1 in which the seal member 35 (O-ring) is attached to the small-outside-diameter part 32a (at the tip of the exhaust flow channel sealing valve 4) having a small area, it is possible to use the larger (or thicker) seal member 35 by disposing the seal member 35 in the outer surface tapered part 32b having a larger area. Therefore, it becomes easy to surely open and close the exhaust flow channel 33c. Further, since the air flow when evacuating the rubber mold 3 is an air current flowing from the front to the rear (see FIGS. 5 (a) and 6 (b)), only a force toward a direction, in which the outside diameter of the inner cylinder 32 is increased, acts on the seal member 35, it is a safety design that the seal member 35 is hard to come off or to be displaced.

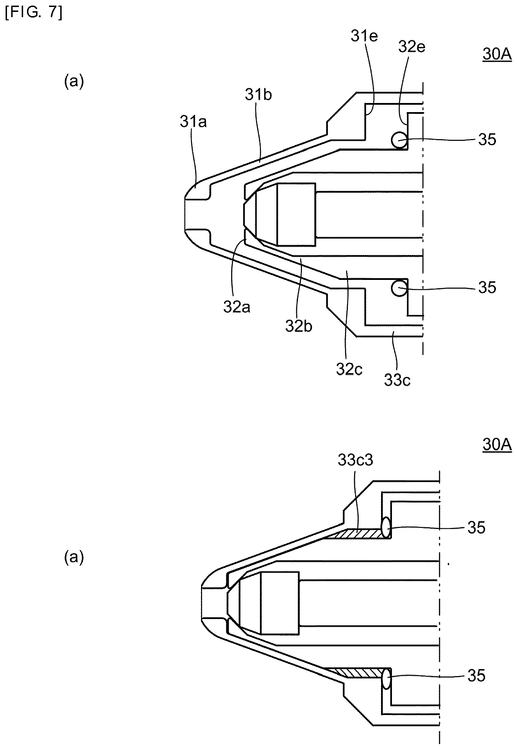

FIG. 7 shows an injection nozzle 30A according to another embodiment of the present invention. In FIG. 7, members corresponding to those of the injection nozzle 30 are indicated by corresponding reference numerals.

In the injection nozzle 30A, the outer cylinder 31 has an outer cylinder stepped surface 31e located behind the small-inside-diameter part 31a, and the inner cylinder 32 has an inner cylinder stepped surface 32e located behind the small-outside-diameter part 32a. The outer cylinder stepped surface 31e is formed at an angle facing rearward. In a preferred embodiment, the normal line of the outer cylinder stepped surface 31e coincides with the rear direction (the axial direction of the outer cylinder 31 and/or the inner cylinder 32). The normal line of the outer cylinder stepped surface 31e and the rear direction may form a certain non-parallel angle. The angle may be, for example, 45 degrees or less. The inner cylinder stepped surface 32e opposes to the outer cylinder stepped surface 31e. In the preferred embodiment, the inner cylinder stepped surface 32e is formed at an angle facing toward forward direction. In the preferred embodiment, the inner cylinder stepped surface 32e and the outer cylinder stepped surface 31e are parallel. The inner cylinder stepped surface 32e and the outer cylinder stepped surface 31e may form a certain non-parallel angle. The angle may be, for example, 45 degrees or less. The injection nozzle 30A further includes a seal member 35 attached to the inner cylinder stepped surface 32e.

In the injection nozzle 30A, when the inner cylinder 32 is moved forward with respect to the outer cylinder 31, the seal member 35 abuts on the outer cylinder stepped surface 31e and the exhaust flow channel 33c closes (FIG. 7 (b)). When the inner cylinder 32 is moved rearward with respect to the outer cylinder 31, the seal member 35 separates from the outer cylinder stepped surface 31e and the exhaust flow channel 33c opens (FIG. 7 (a)). In the injection nozzle 30A, a portion where the seal member 35 and the outer cylinder stepped surface 31e contact to each other forms a back seat, and a portion where the seal member 35 and the inner cylinder stepped surface 32e contact to each other forms a front seat.

In the injection nozzle 30A, a space is generated in the portion 33c3 of the exhaust flow channel 33c in the state shown in FIG. 7 (b) (state 3). Therefore, if even a slight gap exists between the inner surface tapered part 31b and the outer surface tapered part 32b, wax flows into the portion 33c3 during injection to the rubber mold 3 and wax drain creases. However, this problem can be reduced or eliminated by eliminating the gap between the inner surface tapered part 31b and the outer surface tapered part 32b and/or shortening the distance between the inner surface tapered part 31b and the outer cylinder stepped surface 31e as much as possible.

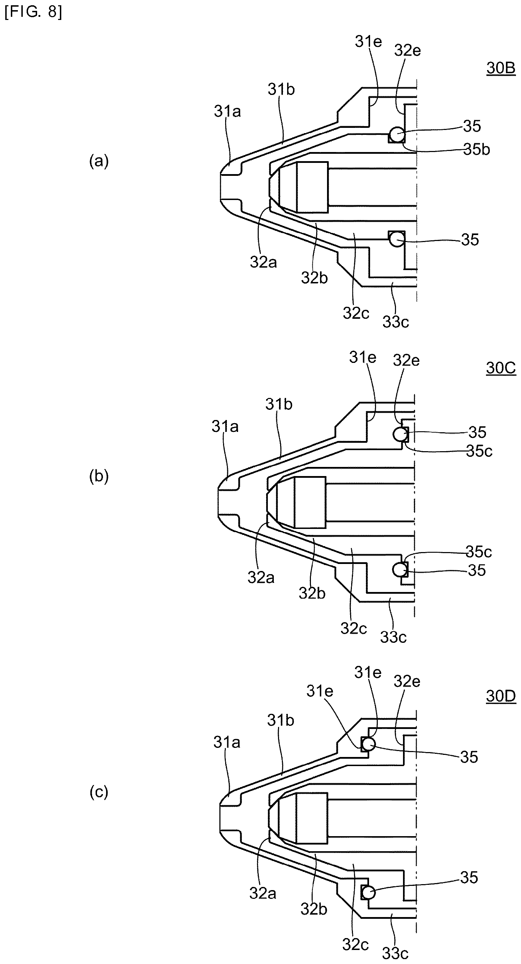

FIG. 8 (a) and FIG. 8 (b) show injection nozzles 30B and 30C according to still another embodiment of the present invention. In the injection nozzles 30B, 30C, by fitting a part of the seal member 35 into the grooves 35b and 35c provided in the inner cylinder outer wall 32o or the inner cylinder stepped surface 32e, the seal member 35 becomes difficult to come off or to be displaced.

FIG. 8 (C) shows an injection nozzle 30D according to still another embodiment of the present invention. In the injection nozzle 30D, the seal member 35 is attached to the outer cylinder stepped surface 31e. When the inner cylinder 32 is advanced/retracted with respect to the outer cylinder 31, the seal member 35 abuts/separates from the inner cylinder stepped surface 32e, whereby the exhaust flow channel 33c opens/closes. In the illustrated example, the outer cylinder stepped surface 31e has a groove 35d for fitting a part of the seal member 35.

In the injection nozzles 30B to 30D, a front seat or a back seat is formed in the grooves 35b to 35d.

In the injection nozzles 30A to 30D of Fig. 7 and 8 or in the wax injection molding machine having the injection nozzles 30A to 30D, the same effect as described above for the injection nozzle 30 or the wax injection molding machine having the injection nozzle 30 can be achieved.

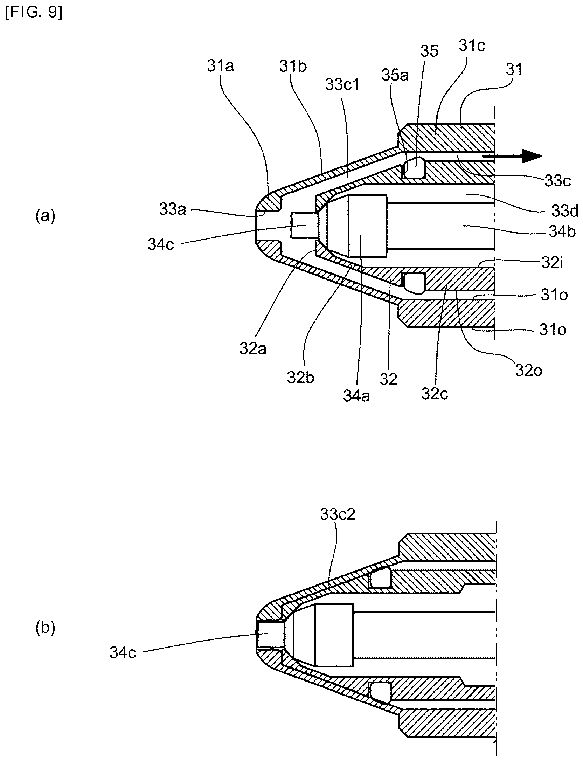

As shown in FIG. 9, the injection nozzles 30, 30A to 30D can have the projection 34c at the tip of the valve seat 34a. Preferably, the projection 34c has a diameter slightly smaller than those of the inner cylinder opening 33b and the outer cylinder opening 33a, and preferably has such a length that, when the valve seat 34a abuts on the inner cylinder opening 32a, the front end of the projection 34c comes close as much as possible to the front end of the outer cylinder opening 33a.

By the protrusion 34c, it is possible to decrease the amount of wax in the outer cylinder opening 33a in the state 1 shown in FIG. 9 (b) to further decrease the wax drain. In order to increase the cross-sectional area of the flow path of the exhaust flow channel 33c and the wax flow channel 33d, it is desirable that the front end of the projection 34c can be sufficiently separated from the outer cylinder opening 33a when the inner cylinder 32 moves rearward, and/or the front end of the projection 34c can be sufficiently separated from the inner cylinder opening 32a when the valve seat 34a moves rearward. Therefore, in the embodiments having the projection 34c, it is preferable that the inner cylinder 31 and/or the valve seat 34a of the injection nozzles 30 and 30A-30D have a sufficiently long stroke.

### INDUSTRIAL APPLICABILITY

It is possible to apply the present invention to a wax injection molding machine used in lost wax casting for, for example, manufacturing small articles such as jewelry, accessories and industrial products and a nozzle for the wax injection molding machine.

The inventions of claims 1-7 have a common special technical feature over the general state of the art in that a seal member is attached to a portion having a larger diameter than a small-outside-diameter part, whereby it becomes possible to enlarge the size of the seal member, improve the sealing property, and/or prevent detachment/displacement of the seal member.

### DESCRIPTION OF REFERENCE NUMERALS

- 1: Model
- 2: Component
- 2a: Sprue runner
- 2b: Pouring gate
- 3: Rubber mold
- 4: Cavity
- 5: Clamp device
- 5a: Clamp force generator
- 5b: Clamp plate
- 5c: Rubber mold mount
- 5 d: Pressing mechanism
- 10: Wax mold injection molding machine
- 11: Tank
- 11a: Upper tank lid
- 11b: Band heater
- 12: Wax tank
- 12a: Compressed air supply source
- 12 W: Wax
- 13: Vacuum tank
- 13a: Vacuum pump
- 13W: Wax drain
- 20, 20 A: Injection nozzle
- 21: Common passage
- 22a: Wax-side passage
- 22b: Wax valve
- 22c: Wax sump
- 22d: Wax-side line
- 22R: Residual wax
- 23a: Exhaust-side passage
- 23b: Exhaust valve
- 23c: Vacuum sump
- 22d: Vacuum-side line
- 30, 30A-30D: Injection nozzle
- 31: Outer cylinder
- 31a: Small-inside-diameter part
- 31b: Inner surface tapered part
- 31c: Large-inside-diameter part
- 31d: Injection valve body
- 31i: Inner wall
- 31o: Outer wall
- 31e: Outer cylinder stepped surface
- 32: Inner cylinder
- 32a: Small-outside-diameter part
- 32b: Outer surface tapered part
- 32c: Large-outside-diameter part
- 32i: Inner wall
- 32o: Outer wall
- 32e: Inner cylinder stepped surface
- 33a: Outer cylinder opening
- 33b: Inner cylinder opening
- 33c: Exhaust flow channel
- 33d: Wax flow channel
- 34a: Valve seat
- 34b: Valve rod
- 34c: Projection
- 35: Seal member
- 35a, 35b, 35c: Seal groove
- 40: Single acting air cylinder
- 41: Piston
- 42: Inner cylinder drive air port
- 43: Return spring
- 44: Atmosphere release port
- 45: Exhaust port
- 46: Wax supply port
- 50: Single acting air cylinder
- 51: Piston
- 52: Valve seta drive air port
- 53: Return spring
- 54: Atmosphere release port

## Claims

1. An injection nozzle (30, 30A-30D) of a wax mold injection molding machine (10), comprising:
an outer cylinder (31) having an inner wall (31i);
an inner cylinder (32) having an inner wall (32i) and an outer wall (32o), and movable in a front-rear direction;
a wax flow channel (33d) defined by the inner wall (32i) of the inner cylinder (32), and communicating with an inner cylinder opening (33b) at a front end of the inner cylinder (32);
an exhaust flow channel (33c) defined between the inner wall (31i) of the outer cylinder (31) and the outer wall (32o) of the inner cylinder (32), and communicating with an outer cylinder opening (33a) at a front end of the outer cylinder (31);
a wax valve for opening and closing the wax flow channel (33d), and
an exhaust valve for opening and closing the exhaust flow channel (33c), wherein:
the outer cylinder (31) includes a small-inside-diameter part (31a) to which the outer cylinder opening (33a) is formed, and an inner surface tapered part (31b) whose inside diameter increases from the small-inside-diameter part (31a) to rearward, and
the inner cylinder (32) includes a small-outside-diameter part (32a) to which the inner cylinder opening (33b) is formed, and an outer surface tapered part (32b) whose outside diameter increases from the small-outside-diameter part (32a) to rearward, **characterized in that**:
the exhaust valve includes a seal member (35) attached to the outer surface tapered part (32b), or a portion rearward of the outer surface tapered part (32b) and having a larger diameter than the small-outside-diameter part (32a).

2. The injection nozzle (30, 30A-30D) according to claim 1, wherein the exhaust valve is opened and closed by the seal member (35) abutting against and separating from the inner wall (31i) of the outer cylinder (31) when the inner cylinder (32) moves forward or rearward.

3. The injection nozzle (30, 30A-30D) according to claim 1, wherein tapering angles of the outer surface tapered part (32b) and the inner surface tapered part (31b) are substantially the same.

4. The injection nozzle (30, 30A-30D) according to claim 1, wherein a groove (35a) for receiving a part of the seal member (35) is formed in the outer surface tapered part (32b).

5. The injection nozzle (30, 30A-30D) according to claim 1, wherein a projection (34c) insertable into the outer cylinder opening (33a) and the inner cylinder opening (33b) is attached to a front end of the wax valve.

6. An injection nozzle (30, 30A-30D) according to claim 1, wherein:
the outer cylinder (31) further includes a back seat (31e) facing rearward,
the inner cylinder (32) further includes a front seat (32e) opposing to the back seat (32e),
the diameters of the back seat (31e) and the front seat (32e) are larger than the outside diameter of the small-outside-diameter part (32a), and
the seal member (35) is attached to the back seat (31e) or the front seat (32e).

7. A wax mold injection molding machine (10) including the injection nozzle (30, 30A-30D) according to any one of claims 1-6.

## Patentansprüche

1. Einspritzdüse (30, 30A bis 30D) einer Wachsmodell-Spritzgießmaschine (10) mit Folgendem:
einem Außenzylinder (31) mit einer Innenwand (31i),
einem Innenzylinder (32) mit einer Innenwand (32i) und einer Außenwand (32o), der sich vor und zurück bewegen lässt,
einem Wachseingusskanal (33d), der durch die Innenwand (32i) des Innenzylinders (32) definiert und an einem vorderen Ende des Innenzylinders (32) mit einer Innenzylinderöffhung (33b) verbunden ist,
einem Entlüftungskanal (33c), der zwischen der Innenwand (31i) des Außenzylinders (31) und der Außenwand (32o) des Innenzylinders (32) definiert und an einem vorderen Ende des Außenzylinders (31) mit einer Außenzylinderöffnung (33a) verbunden ist,
einem Wachsventil zum Öffnen und Verschließen des Wachseingusskanals (33d) und einem Entlüftungsventil zum Öffnen und Verschließen des Entlüftungskanals (33c),
wobei:
der Außenzylinder (31) einen Teil (31a) mit geringem Innendurchmesser, an dem die Außenzylinderöffhung (33a) ausgebildet ist, und einen sich verjüngenden Innenflächenteil (31b) aufweist, dessen Innendurchmesser sich von dem Teil (31a) mit geringem Innendurchmesser aus nach hinten hin vergrößert, und
der Innenzylinder (32) einen Teil (32a) mit geringem Außendurchmesser, an dem die Innenzylinderöffhung (33b) ausgebildet ist, und einen sich verjüngenden Außenflächenteil (32b) aufweist, dessen Außendurchmesser sich von dem Teil (32a) mit geringem Außendurchmesser aus nach hinten hin vergrößert, **dadurch gekennzeichnet, dass**:
das Entlüftungsventil ein Dichtungselement (35) aufweist, das an dem sich verjüngenden Außenflächenteil (32b) oder einem Abschnitt hinter dem sich verjüngenden Außenflächenteil (32b) angebracht ist und einen größeren Durchmesser aufweist als der Teil (32a) mit geringem Außendurchmesser.

2. Einspritzdüse (30, 30A bis 30D) nach Anspruch 1, wobei das Entlüftungsventil dadurch geöffnet und geschlossen wird, dass das Dichtungselement (35) an der Innenwand (31i) des Außenzylinders (31) anliegt beziehungsweise davon getrennt ist, wenn sich der Innenzylinder (32) nach vorn beziehungsweise nach hinten bewegt.

3. Einspritzdüse (30, 30A bis 30D) nach Anspruch 1, wobei sich Verjüngungswinkel des sich verjüngenden Außenflächenteils (32b) und des sich verjüngenden Innenflächenteils (31b) im Wesentlichen gleichen.

4. Einspitzdüse (30, 30A bis 30D) nach Anspruch 1, wobei in dem sich verjüngenden Außenflächenteil (32b) eine Nut (35a) zum Aufnehmen eines Teils des Dichtungselements (35) ausgebildet ist.

5. Einspritzdüse (30, 30A bis 30D) nach Anspruch 1, wobei an einem vorderen Ende des Wachsventils eine in die Außenzylinderöffnung (33a) und die Innenzylinderöffhung (33b) einführbare Nase (34c) angebracht ist.

6. Einspritzdüse (30, 30A bis 30D) nach Anspruch 1, wobei:
der Außenzylinder (31) ferner einen nach hinten weisenden, hinteren Sitz (31e) aufweist,
der Innenzylinder (32) ferner einen dem hinteren Sitz (32e) gegenüberliegenden, vorderen Sitz (32e) aufweist,
die Durchmesser des hinteren Sitzes (31e) und des vorderen Sitzes (32e) größer sind als der Außendurchmesser des Teils (32a) mit geringem Außendurchmesser und
das Dichtungselement (35) an dem hinteren Sitz (31e) oder dem vorderen Sitz (32e) angebracht ist.

7. Wachsmodell-Spritzgießmaschine (10) mit der Einspritzdüse (30, 30A bis 30D) nach einem der Ansprüche 1 bis 6.

## Revendications

1. Buse d'injection (30, 30A-30D) d'une machine à mouler par injection à moule de cire (10), comportant :
un cylindre extérieur (31) ayant une paroi intérieure (31i) ;
un cylindre intérieur (32) ayant une paroi intérieure (32i) et une paroi extérieure (32o), et mobile dans une direction avant-arrière ;
un canal d'écoulement de cire (33d) défini par la paroi intérieure (32i) du cylindre intérieur (32), et en communication avec une ouverture de cylindre intérieur (33b) au niveau d'une extrémité avant du cylindre intérieur (32) ;
un canal d'écoulement d'évacuation (33c) défini entre la paroi intérieure (31i) du cylindre extérieur (31) et la paroi extérieure (32o) du cylindre intérieur (32), et en communication avec une ouverture de cylindre extérieur (33a) au niveau d'une extrémité avant du cylindre extérieur (31) ;
une soupape à cire servant à ouvrir et à fermer le canal d'écoulement de cire (33d), et
une soupape d'évacuation servant à ouvrir et à fermer le canal d'écoulement d'évacuation (33c), dans laquelle :
le cylindre extérieur (31) comprend une partie de petit diamètre intérieur (31a) au niveau de laquelle l'ouverture de cylindre extérieur (33a) est formée, et une partie conique de surface intérieure (31b) dont le diamètre intérieur augmente depuis la partie de petit diamètre intérieur (31a) vers l'arrière, et
le cylindre intérieur (32) comprend une partie de petit diamètre extérieur (32a) au niveau de laquelle l'ouverture de cylindre intérieur (33b) est formée, et une partie conique de surface extérieure (32b) dont le diamètre extérieur augmente depuis la partie de petit diamètre extérieur (32a) vers l'arrière, **caractérisée en ce que** :
la soupape d'évacuation comprend un élément d'étanchéité (35) attaché au niveau de la partie conique de surface extérieure (32b), ou une partie à l'arrière de la partie conique de surface extérieure (32b) et ayant un diamètre supérieur par rapport à la partie de petit diamètre extérieur (32a).

2. Buse d'injection (30, 30A-30D) selon la revendication 1, dans laquelle la soupape d'évacuation est ouverte et fermée par l'élément d'étanchéité (35) venant prendre appui contre, et étant séparée de, la paroi intérieure (31i) du cylindre extérieur (31) quand le cylindre intérieur (32) se déplace vers l'avant ou vers l'arrière.

3. Buse d'injection (30, 30A-30D) selon la revendication 1, dans laquelle les angles de conicité de la partie conique de surface extérieure (32b) et de la partie conique de surface intérieure (31b) sont sensiblement les mêmes.

4. Buse d'injection (30, 30A-30D) selon la revendication 1, dans laquelle une rainure (35a) servant à recevoir une partie de l'élément d'étanchéité (35) est formée dans la partie conique de surface extérieure (32b).

5. Buse d'injection (30, 30A-30D) selon la revendication 1, dans laquelle une partie saillante (34c) en mesure d'être insérée dans l'ouverture de cylindre extérieur (33a) et l'ouverture de cylindre intérieur (33b) est attachée au niveau d'une extrémité avant de la soupape à cire.

6. Buse d'injection (30, 30A-30D) selon la revendication 1, dans laquelle :
le cylindre extérieur (31) comprend par ailleurs un siège arrière (31e) orienté vers l'arrière,
le cylindre intérieur (32) comprend par ailleurs un siège avant (32e) à l'opposé du siège arrière (32e),
les diamètres du siège arrière (31e) et du siège avant (32e) sont supérieurs au diamètre extérieur de la partie de petit diamètre extérieur (32a), et
l'élément d'étanchéité (35) est attaché au siège arrière (31e) ou au siège avant (32e).

7. Machine à mouler par injection à moule de cire (10) comprenant la buse d'injection (30, 30A-30D) selon l'une quelconque des revendications 1 à 6.
